# EUROPEAN PATENT APPLICATION

(11) **EP 3 315 644 A1**
(43) Date of publication of application: **02.05.2018**
(21) Application number: 16814113.3
(22) Date of filing: 01.06.2016
(51) Int. Cl.: D04H 1/4242, D04H 1/736, H01B 1/04, H01B 5/08, H01B 13/00

(54) **METHOD FOR MANUFACTURING CARBON NANOTUBE WEB, METHOD FOR MANUFACTURING CARBON NANOTUBE AGGREGATE, AND APPARATUS FOR MANUFACTURING CARBON NANOTUBE WEB**

(30) Priority: 25.06.2015 JP 2015128095
(71) Applicant: Hitachi Zosen Corporation, Osaka-shi, Osaka 559-8559 (JP)
(72) Inventor: INOUE, Tetsuya, Osaka-shi Osaka 559-8559 (JP); MORIHARA, Norifumi, Osaka-shi Osaka 559-8559 (JP); YAMASHITA, Tomoya, Osaka-shi Osaka 559-8559 (JP)
(74) Representative: Grünecker Patent- und Rechtsanwälte PartG mbB
(86) International application number: PCT/JP2016/066183
(87) International publication number: WO 2016/208342

(57) **Abstract**

A method for producing a carbon nanotube web includes a step of preparing a carbon nanotube array disposed on a substrate, the carbon nanotube array including a plurality of carbon nanotubes vertically aligned relative to the substrate; and a step of drawing a carbon nanotube web from the carbon nanotube array, the carbon nanotube web including a plurality of carbon nanotube single yarns arranged in parallel in a direction intersecting the direction carbon nanotube single yarns extend, and the carbon nanotube single yarns including a plurality of continuously connected carbon nanotubes. In the step of drawing a carbon nanotube web, the drawing position of the carbon nanotube web from the carbon nanotube array is kept at the same position in the drawing direction of the carbon nanotube web.

## Description

### [TECHNICAL FIELD]

The present invention relates to a method for producing a carbon nanotube web, a method for producing a carbon nanotube collected product, and an apparatus for producing a carbon nanotube web.

### [BACKGROUND ART]

Carbon nanotubes have been known to have excellent mechanical strength, thermal conductivity, and electrical conductivity. To use such excellent characteristics of carbon nanotubes, use of carbon nanotubes as a material for various industrial products has been examined by forming the plurality of carbon nanotubes into a predetermined shape. One technique that has been examined is use of highly spinnable carbon nanotube to draw a plurality of carbon nanotubes of a carbon nanotube array into a web.

For example, Patent Document 1 below has proposed a method for producing a carbon nanotube film, in which a carbon nanotube array composed of a plurality of carbon nanotubes is grown on a substrate, the substrate is fixed, and a plurality of carbon nanotubes are drawn from the carbon nanotube array on the fixed substrate to form a carbon nanotube film.

### [Citation List]

### [Patent Document]

Patent Document 1 Japanese Unexamined Patent Publication No.2009-91240

### [SUMMARY]

### PROBLEM TO BE SOLVED BY THE INVENTION

However, in the method for producing a carbon nanotube film described in Patent Document 1, the substrate supporting the carbon nanotube array is fixed, and therefore when the carbon nanotube array is separated from the substrate in sequence along with the drawing of the carbon nanotube, the drawing position of the carbon nanotube from the carbon nanotube array gradually moves toward an upstream side of the drawing direction of the carbon nanotube.

When the drawing position of the carbon nanotube is moved, relative position of the carbon nanotube film and the carbon nanotube array changes, and therefore drawing from the carbon nanotube array may become unstable.

Thus, an object of the present invention is to provide a method for producing a carbon nanotube web, in which a carbon nanotube web can be stably drawn from the carbon nanotube array and production efficiency can be improved; a method for producing a carbon nanotube collected product; and an apparatus for producing a carbon nanotube web.

### MEANS FOR SOLVING THE PROBLEM

The present invention [1] includes a method for producing a carbon nanotube web, the method including the steps of:
a step of preparing a carbon nanotube array disposed on a substrate, the carbon nanotube array comprising a plurality of carbon nanotubes vertically aligned relative to the substrate, and
a step of drawing a carbon nanotube web from the carbon nanotube array,
   the carbon nanotube web comprising a plurality of carbon nanotube single yarns arranged in parallel in a direction intersecting the direction carbon nanotube single yarns extend, and
   the carbon nanotube single yarns comprising a plurality of continuously connected carbon nanotubes;
wherein in the step of drawing the carbon nanotube web, the drawing position of the carbon nanotube web from the carbon nanotube array is kept at the same position in the drawing direction of the carbon nanotube web.

With this method, in the step of drawing a carbon nanotube web, the position at which the carbon nanotube web is drawn is kept at the same position in the drawing direction of the carbon nanotube web, and therefore changes in relative positions of the carbon nanotube web and the carbon nanotube array can be suppressed.

Thus, the carbon nanotube web can be drawn from the carbon nanotube array stably, and production efficiency of the carbon nanotube web can be improved.

The present invention [2] includes the method for producing a carbon nanotube web of [1] above, wherein
in the step of drawing a carbon nanotube web, the carbon nanotube array is successively separated from the substrate and the drawing position moves toward the upstream in the drawing direction relative to the substrate along with the drawing of the carbon nanotube web, and
at the drawing position, the substrate is moved toward the downstream of the drawing direction at the same speed with the moving speed of the drawing position so that the drawing position is kept the same in the drawing direction.

With this method, in the step of drawing a carbon nanotube web, while the position at which the carbon nanotube web is drawn moves toward the upstream in the drawing direction relative to the substrate, the substrate moves downstream in the drawing direction at the same speed with the moving speed of the drawing position at the position at which the carbon nanotube web is drawn.

Thus, movement of the position at which the carbon nanotube web is drawn can be offset by movement of the substrate at the drawing position, and the position at which the carbon nanotube web is drawn can be reliably kept at the same position in the drawing direction of the carbon nanotube web.

Then, the substrate moves downstream in the drawing direction at the position at which the carbon nanotube web is drawn, and therefore the carbon nanotube array disposed on the substrate can be successively fed to the position at which the carbon nanotube web is drawn.

As a result, the carbon nanotube web can be stably drawn continuously from the carbon nanotube array.

The present invention [3] includes the method for producing a carbon nanotube web of [2] above, wherein in the step of drawing a carbon nanotube web, the substrate from which the carbon nanotube array is separated is wound up.

With this method, in the step of drawing a carbon nanotube web, the substrate passes the position at which the carbon nanotube web is drawn toward the downstream in the drawing direction, and after the carbon nanotube array is separated, the substrate is wound up.

Thus, after the substrate passed the position at which the carbon nanotube web is drawn, the substrate can be prevented from being hindrance to the drawing of the carbon nanotube web, and the substrate can be collected efficiently, achieving space saving.

The present invention [4] includes the method for producing a carbon nanotube web of any one of [1] to [3] above, wherein in the step of drawing a carbon nanotube web, the carbon nanotube web is drawn from the carbon nanotube array so as to be tilted at an angle of 0° or more and 15° or less relative to the virtual plane orthogonal to the alignment direction of the carbon nanotube in the carbon nanotube array.

However, when the carbon nanotube web is drawn so as to be tilted to an angle of more than 15° relative to the virtual plane orthogonal to the carbon nanotube of the carbon nanotube array from the carbon nanotube array, drawing of the carbon nanotube web becomes unstable, and at the time of drawing of the carbon nanotube web, the carbon nanotube web may be partially snapped.

Meanwhile, with the above-described method, the carbon nanotube web is drawn from the carbon nanotube array so as to be tilted at an angle of 0°or more and 15°or less relative to the virtual plane orthogonal to the carbon nanotube of the carbon nanotube array.

Thus, the carbon nanotube web can be drawn from the carbon nanotube array even more stably, and upon drawing the carbon nanotube web, partial snapping of the carbon nanotube web can be suppressed.

The present invention [5] includes a method for producing a carbon nanotube collected product, the method including the steps of:
a step of preparing a roller having a cylindrical shape;
a step of allowing the carbon nanotube web to run in the circumferential direction of the roller so that the carbon nanotube web is positioned on the circumferential face of the roller, the carbon nanotube web being produced by the method for producing a carbon nanotube web of any one of [1] to [4] above; and
a step of processing the carbon nanotube web after the carbon nanotube web is allowed to pass the roller.

With this method, the carbon nanotube web drawn as described above is allowed to run in the circumferential direction of the roller without being processed, and processed after passing on the roller.

That is, the plurality of carbon nanotube single yarns in the carbon nanotube web are arranged in parallel in a direction intersecting the direction carbon nanotube single yarns extend between the position at which the carbon nanotube web is drawn and the roller. That is, the plurality of carbon nanotube single yarns are disposed to be substantially parallel to each other, and this state is kept.

However, when the carbon nanotube web is processed between the position at which the carbon nanotube web is drawn and the roller, for example, twisted together, the force derived from the processing affects the position at which the carbon nanotube web is drawn through the plurality of carbon nanotube single yarns.

This may unstabilize the drawing of the carbon nanotube web, and may leave the carbon nanotube array on the substrate that passed the drawing position, and may cause partial snapping of the carbon nanotube web.

Meanwhile, with the above-described method, the carbon nanotube web is processed after passing the roller, and therefore the roller suppresses effects of the force derived from the processing on the position at which the carbon nanotube web is drawn.

Thus, the carbon nanotube web can be drawn stably and reliably, and the carbon nanotube web can be smoothly processed. As a result, production efficiency of the carbon nanotube collected product can be improved.

The present invention [6] includes the method for producing a carbon nanotube collected product of [5] above, wherein the step of processing the carbon nanotube web includes a step of twisting the carbon nanotube web together to make a twisted yarn.

With this method, by a simple method of twisting the carbon nanotube web together, the carbon nanotube web can be smoothly processed to make a twisted yarn. Thus, productivity of the twisted yarn can be improved.

The present invention [7] includes the method for producing a carbon nanotube collected product of [5] above, wherein the step of processing a carbon nanotube web includes a step of preparing a winding shaft having a cylindrical shape, a step of winding the carbon nanotube web around the circumferential face of the winding shaft several times, and a step of cutting the carbon nanotube web wound around the circumferential face of the winding shaft several times in an axis direction of the winding shaft and forming it into a sheet.

With this method, by a simple method of winding the carbon nanotube web around the winding shaft several times and cutting it, the carbon nanotube web can be smoothly processed, and a sheet (in the following, referred to as carbon nanotube stacked sheet) in which a plurality of carbon nanotube webs are stacked can be produced. Thus, productivity of the carbon nanotube stacked sheet can be improved.

The present invention [8] includes an apparatus for producing a carbon nanotube web, the apparatus including:
a substrate on which a carbon nanotube array is disposed, the carbon nanotube array including a plurality of vertically aligned carbon nanotubes;
a drawing member that draws a carbon nanotube web from the carbon nanotube array,
   the carbon nanotube web including carbon nanotube single yarns arranged in parallel in a direction intersecting the direction carbon nanotube single yarns extend, and the carbon nanotube single yarn including the plurality of carbon nanotubes continuously connected; and
a conveyer member that conveys the substrate toward the downstream in the drawing direction of the carbon nanotube web at the drawing position of the carbon nanotube web from the carbon nanotube array.

With such a configuration, the drawing member draws the carbon nanotube web from the carbon nanotube array and the conveyer member convey the substrate toward the downstream in the drawing direction at the position at which the carbon nanotube web is drawn.

Thus, upon drawing the carbon nanotube web, changes in relative positions of the carbon nanotube web and the carbon nanotube array can be adjusted, and the carbon nanotube web can be drawn from the carbon nanotube array stably.

Furthermore, the carbon nanotube array disposed on the substrate can be successively fed to the position at which the carbon nanotube web is drawn, and therefore the carbon nanotube web can be drawn continuously and stably from the carbon nanotube array.

### [Effects of the Invention]

With the method for producing a carbon nanotube web of the present invention, the carbon nanotube web can be stably drawn from the carbon nanotube array, and production efficiency can be improved.

With the method for producing a carbon nanotube collected product of the present invention, the stably drawn carbon nanotube web can be smoothly processed, and production efficiency can be improved.

With the apparatus for producing a carbon nanotube web of the present invention, the carbon nanotube web can be stably and continuously drawn from the carbon nanotube array, and production efficiency can be improved.

### [BRIEF DESCRIPTION OF THE DRAWINGS]

FIG. 1 is a perspective view of a spinning apparatus as a first embodiment of the apparatus for producing a carbon nanotube web of the present invention.
FIG. 2A is a diagram for illustrating an embodiment of the step of preparing a carbon nanotube array of FIG. 1, showing a step of forming a catalyst layer on a substrate. Following FIG. 2A,
FIG. 2B shows a step of heating the substrate and having the catalyst layer aggregate into a plurality of granular bodies. Following FIG. 2B, FIG. 2C shows a step of feeding a source gas to the plurality of granular bodies and growing a plurality of carbon nanotubes. Following FIG. 2C, FIG. 2D shows a step of drawing a plurality of carbon nanotubes and preparing a carbon nanotube web.
FIG. 3A is a schematic diagram illustrating the configuration of the spinning apparatus shown in FIG. 1. FIG. 3B is a schematic diagram illustrating the configuration of a modified example of the spinning apparatus shown in FIG. 3A.
FIG. 4A is a schematic diagram illustrating the configuration of a sheet manufacturing apparatus as a second embodiment of the apparatus for producing a carbon nanotube web of the present invention. FIG. 4B is a perspective view of a carbon nanotube stacked sheet manufactured by the sheet manufacturing apparatus shown in FIG. 4A.
FIG. 5 is a schematic diagram illustrating the configuration of a modified example of the web production unit shown in FIG. 3A.

### [DESCRIPTION OF EMBODIMENTS]

### 1. First embodiment

### (1) Method for producing a carbon nanotube web

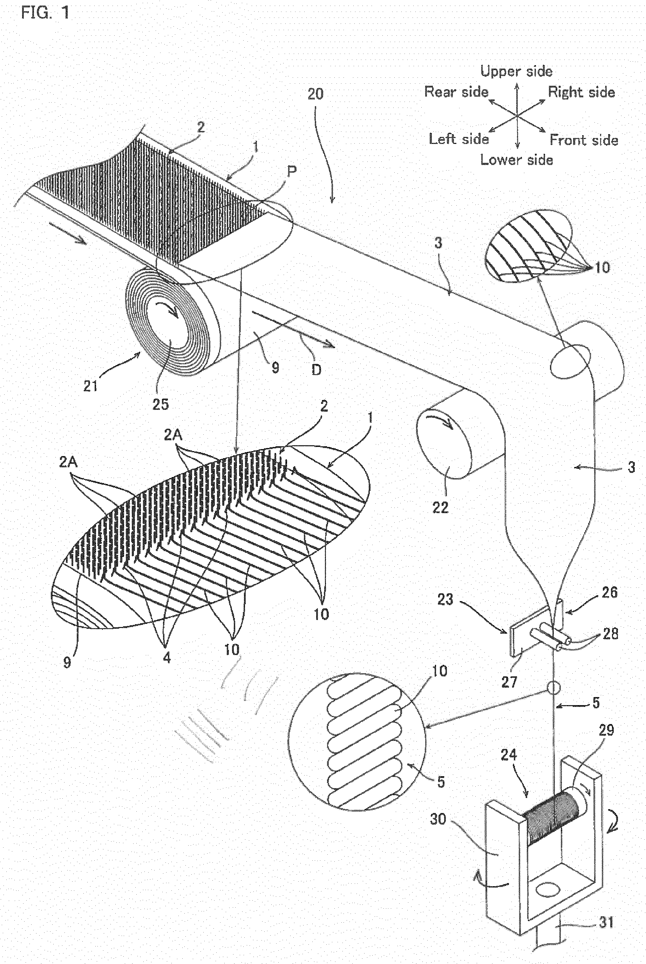

A first embodiment of the method for producing a carbon nanotube web of the present invention includes, for example, as shown in FIG. 1, a step of preparing a carbon nanotube array 2 disposed on a substrate 1 (preparation step), and a step of drawing a carbon nanotube web 3 from the carbon nanotube array 2 (drawing step).

In such a production method, first, the carbon nanotube array 2 disposed on the substrate 1 is prepared.

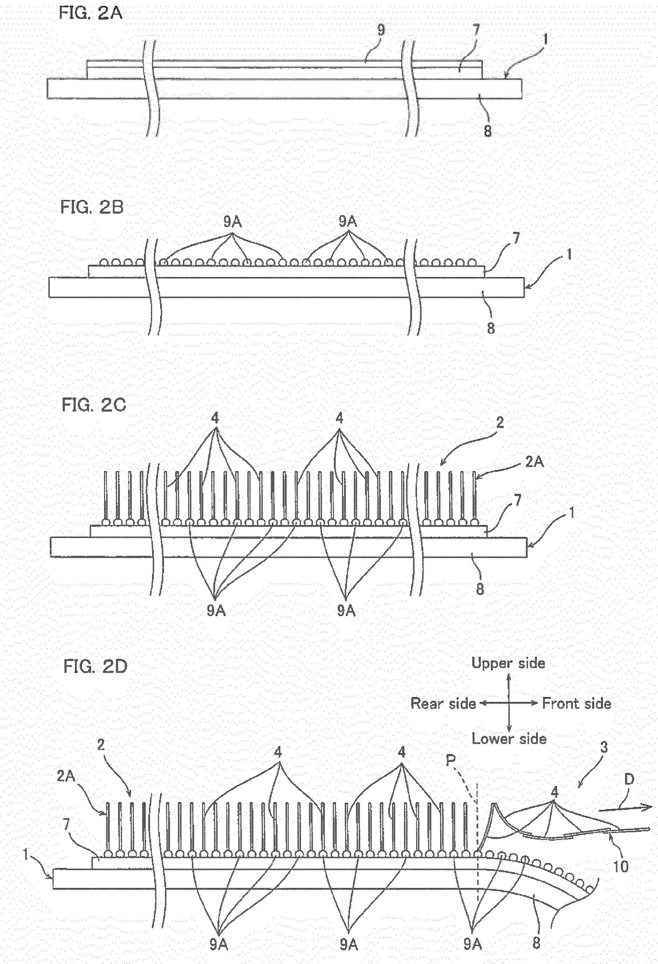

To prepare the carbon nanotube array 2, for example, as shown in FIG. 2A to FIG. 2C, a plurality of vertically aligned carbon nanotubes 4 are grown on the substrate 1 by chemical vapor deposition method (CVD method).

To be more specific, as shown in FIG. 2A, first, a substrate 1 is prepared. The substrate 1 is not particularly limited. The substrate 1 may be, for example, a publicly known substrate which is used for a CVD method. A commercially available item may also be used as the substrate 1. For example, the substrate 1 may be a silicon substrate, a stainless steel substrate 8 on which a silicon dioxide film 7 is stacked, etc., and may preferably be a stainless steel substrate 8 on which a silicon dioxide film 7 is stacked.

The substrate 1 is preferably elongated and has a flat belt shape in view of continuously feeding the carbon nanotube array 2 to be described later as shown in FIG. 1, and preferably is flexible in view of winding up of the substrate 1 to be described later.

In the first embodiment, the substrate 1 is a stainless steel substrate 8 on which silicon dioxide film 7 is stacked as shown in FIG. 1 to FIG. 2D, is flexible, and has an elongated flat belt shape.

In the description below, the direction of the thickness of the substrate 1 is up-down direction, and the direction of elongation of the substrate 1 is front-back direction, and the direction of the width of the substrate 1 is left-right direction. To be specific, the directions are based on the direction arrow in the figures.

When the substrate 1 is the stainless steel substrate 8 on which the silicon dioxide film 7 is stacked, the stainless steel substrate 8 has a thickness (size in up-down direction) of, for example, 20 µm or more, preferably 50 µm or more, and for example, 100 µm or less, preferably 80 µm or less, and the silicon dioxide film 7 has a thickness of, for example, 10 nm or more, preferably 100 nm or more, and for example, 1 µm or less, preferably 500 nm or less.

As shown in FIG. 2A, a catalyst layer 9 is formed on the substrate 1, preferably on the silicon dioxide film 7. To form the catalyst layer 9 on the substrate 1, the metal catalyst is formed on the substrate 1 (preferably the silicon dioxide film 7) by a known method of forming a film.

Examples of the metal catalyst include iron, cobalt, and nickel, and preferably, iron is used. Such a metal catalyst may be used singly or in a combination of two or more. The film-forming method may be, for example, vacuum deposition and sputtering, and vacuum deposition is preferable.

Accordingly, the catalyst layer 9 is disposed on the substrate 1. When the substrate 1 is the stainless steel substrate 8 on which the silicon dioxide film 7 is stacked, for example, the silicon dioxide film 7 and the catalyst layer 9 may be formed at the same time by applying a mixed solution of a silicon dioxide precursor solution and a metal catalyst precursor solution onto the stainless steel substrate 8 and phase-separating the mixed solution, and then drying it, as disclosed in Japanese Unexamined Patent Publication No. 2014-94856.

The catalyst layer 9 has a thickness (size in up-down direction) of, for example, 1 nm or more, preferably 2 nm or more, and for example, 10 nm or less, preferably 4 nm or less.

Next, the substrate 1 on which the catalyst layer 9 is disposed is heated to a temperature of 700°C or more to 900°C or less, as shown in FIG. 2B. Thereby, the catalyst layer 9 is aggregated to be a plurality of granular bodies 9A.

Then, as shown in FIG. 2C, a source gas is fed to the heated substrate 1. The source gas contains hydrocarbon gas with a carbon number of 1 to 4 (lower hydrocarbon gas). The hydrocarbon gas with a carbon number of 1 to 4 may be, for example, methane gas, ethane gas, propane gas, butane gas, ethylene gas, acetylene gas, etc., and acetylene gas is preferable.

The source gas may also contain hydrogen gas, inert gas (for example, helium, argon, etc.), water vapor, etc., as necessary.

When the source gas contains hydrogen gas or inert gas, the concentration of the hydrocarbon gas in the source gas may be, for example, 1 volume % or more, preferably 30 volume % or more, and for example, 90 volume % or less, preferably 50 volume % or less. The feed time of the source gas may be, for example, 1 minute or more, preferably 5 minutes or more, and for example, 60 minutes or less, preferably 30 minutes or less.

Accordingly, the plurality of carbon nanotubes 4 grow from the plurality of granular bodies 9A. For convenience, FIG. 2C shows one carbon nanotube 4 growing from one granular body 9A. However, the present invention is not limited to this. A plurality of carbon nanotubes 4 may grow from one granular body 9A.

The plurality of carbon nanotubes 4 extend in the thickness direction (up-down direction) of the substrate 1 such that they are substantially parallel to each other on the substrate 1. That is, the plurality of carbon nanotubes 4 are aligned in a direction orthogonal to the substrate 1 (vertically aligned).

The carbon nanotubes 4 may be a single-walled carbon nanotube or a multi-walled carbon nanotube, and a multi-walled carbon nanotube is preferable. These examples of the carbon nanotube 4 may be used singly or in a combination of two or more.

The carbon nanotube 4 has an average external diameter of, for example, 1 nm or more, preferably 5 nm or more, and for example, 100 nm or less, preferably 50 nm or less, even more preferably, 20 nm or less.

The carbon nanotubes 4 may have an average length (an average size in the axial direction) of, for example, 1 *µ*m or more, preferably 100 *µ*m or more, more preferably 200 *µ*m or more, and for example, 1,000 *µ*m or less, preferably 500 *µ*m or less, more preferably 400 *µ*m or less. The number of the layers, the average external diameter, and the average length of the carbon nanotubes 4 are measured, for example, by publicly known methods such as Raman spectroscopic analysis and electron microscope observation.

Accordingly, the carbon nanotube array 2 including the plurality of carbon nanotubes 4 is formed on the substrate 1.

As shown in FIG. 1, the carbon nanotube array 2 has a thickness along up-down direction and substantially has a sheet shape extending in surface directions (the front-back direction and the left-right direction) which are orthogonal to the up-down direction). To be specific, in the left-right direction, the carbon nanotube array 2 includes a plurality of rows 2A each including the plurality of carbon nanotubes 4 which are linearly disposed along the front-back direction.

In the carbon nanotube array 2, the plurality of rows 2A are arranged in spaced-apart relation in left-right directions at an interval of, for example, 100 nm to 200 nm, and in each row 2A, the plurality of carbon nanotubes 4 are arranged in spaced-apart relation in front-back directions at an interval of, for example, 100 nm to 200 nm. In the carbon nanotube array 2, the plurality of carbon nanotubes 4 are densified in front-rear and left-right directions.

The carbon nanotube array 2 has a bulk density of, for example, 10 mg/cm³ or more, preferably 20 mg/cm³ or more, and for example, 60 mg/cm³ or less, preferably 50 mg/cm³ or less. The bulk density of the carbon nanotube array 2 is calculated, for example, from the mass per unit area (weight per unit area: mg/cm²) and the length of the carbon nanotubes (which is measured by SEM (from JEOL Corporation) or by a non-contact film thickness meter (from KEYENCE Corporation)).

Then, as shown in FIG. 1 and FIG. 2D, while the carbon nanotube web 3 is drawn from the carbon nanotube array 2, the substrate 1 is conveyed so as to be moved to the downstream in the drawing direction D of the carbon nanotube web 3 at the drawing position P of the carbon nanotube web 3 from the carbon nanotube array 2.

To draw the carbon nanotube web 3 from the carbon nanotube array 2, as shown in FIG. 1, for example, of the carbon nanotube array 2, the carbon nanotubes 4 positioned at the front end portion of the rows 2A are collectively held by a drawing device (not shown), and then pulled in a direction which intersects the thickness direction of the substrate 1, preferably to the front side.

Thereby, the pulled carbon nanotubes 4 are drawn out from the corresponding granular bodies 9A, as shown in FIG. 2D. At this moment, the carbon nanotubes 4 which are adjacent in front-back direction to the drawn carbon nanotubes 4 are drawn out from the corresponding granular bodies 9A because the ends (lower ends) of the drawn carbon nanotubes 4 are attached to the ends (lower ends) of the adjacent carbon nanotubes 4 by the frictional force, Van der Waals force, etc.

At this moment, one ends (lower ends) of the carbon nanotubes 4 attached to the drawn carbon nanotubes 4 are pulled downstream in the drawing direction D, and the other ends (upper ends) of the carbon nanotubes 4 are tilted upstream in the drawing direction D, causing the other ends (upper ends) of the carbon nanotubes 4 to attach to other ends (upper ends) of adjacent carbon nanotubes 4.

Subsequently, the other ends (upper ends) of the carbon nanotubes 4 attached to the drawn carbon nanotubes 4 are pulled downstream in the drawing direction D, and the one ends (lower ends) of the carbon nanotubes 4 are drawn out from the corresponding granular bodies 9A, causing the one ends (lower ends) of the carbon nanotubes 4 to attach to one ends (lower ends) of adjacent carbon nanotubes 4.

Accordingly, the plurality of carbon nanotubes 4 are successively drawn from the carbon nanotube array 2 to thereby form a carbon nanotube single yarn 10 including a plurality of continuously and linearly connected carbon nanotubes 4.

More specifically, the carbon nanotube single yarn 10 includes continuous carbon nanotubes 4 which are connected to each other by attaching their one ends (lower ends) or attaching their other ends (upper ends), and are aligned along the extension direction of the carbon nanotube single yarn 10.

For convenience, FIG. 1 and FIG. 2D illustrate one carbon nanotube 4 continuously connected to another one carbon nanotube 4 to form the carbon nanotube single yarn 10. However, actually, a bundle of the plurality of carbon nanotubes 4 is connected continuously to form the carbon nanotube single yarn 10.

The carbon nanotube single yarn 10 is an untwisted yarn which is not twisted and has a yarn shape (linear shape). That is, the twist angle of each of the carbon nanotube single yarns 10 is substantially 0°.

The carbon nanotube single yarn 10 has an external diameter of, for example, 5 nm or more, preferably 8 nm or more, and for example, 100 nm or less, preferably 80 nm or less, even more preferably, 50 nm or less.

The plurality of carbon nanotube single yarns 10 are arranged in parallel in a direction intersecting the extension direction of the carbon nanotube single yarns 10 because the carbon nanotubes 4 of the rows 2A are drawn at once simultaneously and in parallel (see the enlargement in FIG. 1).

To be specific, the plurality of carbon nanotube single yarns 10 extend along front-back directions, and arranged in parallel in left-right directions. The plurality of carbon nanotube single yarns 10 arranged in parallel in this way substantially have a sheet shape and thus constitutes the carbon nanotube web 3.

The carbon nanotube web 3 is drawn from the carbon nanotube array 2 on the substrate 1 in the above-described manner.

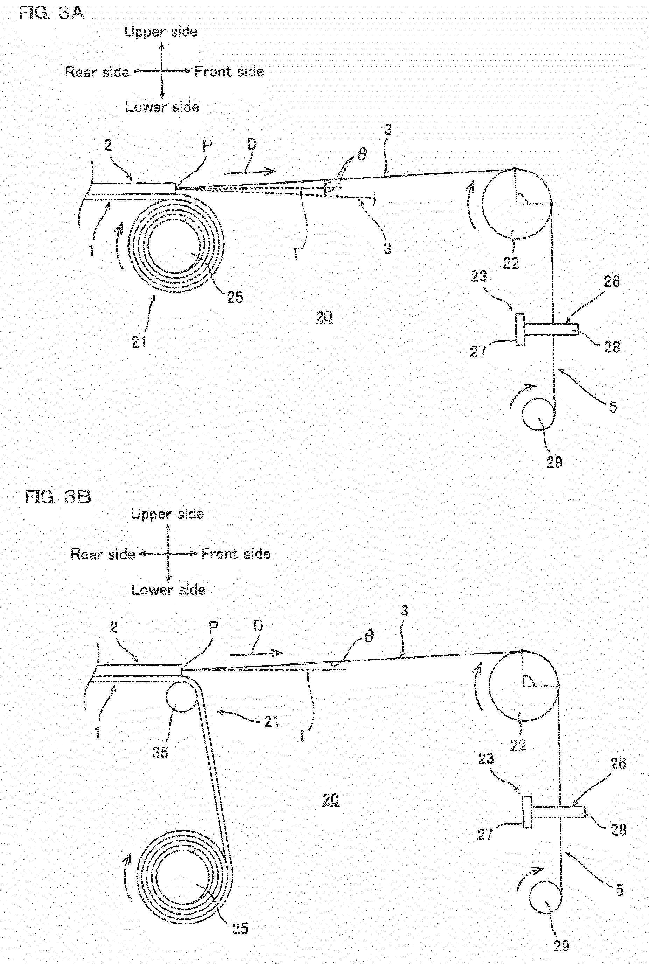

At this moment, the carbon nanotube web 3 is drawn from the carbon nanotube array 2 so as to be tilted to form a predetermined drawing angle θ with the virtual plane I orthogonal to the alignment direction of the carbon nanotube 4 in the carbon nanotube array 2, that is, the virtual plane I extending in front-rear left-right directions, as shown in FIG. 3A.

The drawing angle θ of the carbon nanotube web 3 is, based on the result of experiments (ref: Table 1), for example, 0° or more, preferably more than 0°, even more preferably, 2° or more, and for example, 30° or less, preferably 15° or less, even more preferably, 10° or less, particularly preferably 5° or less.

The carbon nanotube web 3 may be tilted with the above-described drawing angle θ (ref: phantom line in FIG. 3A) relative to the virtual plane I on the side of the substrate 1 (to be specific, lower side). Preferably, the carbon nanotube web 3 is tilted with the above-described drawing angle θ to the other side of the substrate 1 (to be specific, upper side) relative to the virtual plane I (ref: solid line in FIG. 3A).

The carbon nanotube web 3 is drawn at the speed of, for example, 10 mm/min or more, preferably 100 mm/min or more, even more preferably, 300 mm/min or more, and for example, 10000 mm/min or less, preferably 1000 mm/min or less, even more preferably, 700 mm/min or less.

When the carbon nanotube web 3 is drawn from the carbon nanotube array 2, as shown in FIG. 2D, the plurality of carbon nanotubes 4 are drawn from the carbon nanotube array 2, and therefore the carbon nanotube array 2 is successively separated from the substrate 1 along with the drawing of the carbon nanotube web 3.

Then, the drawing position P of the carbon nanotube web 3 from the carbon nanotube array 2 moves toward the upstream in the drawing direction D relative to the substrate 1.

The carbon nanotube web 3 is drawn, when the carbon nanotube 4 has an average length of 200 µm to 400 µm and the carbon nanotube array 2 has a bulk density of 20 mg/cm³ to 50 mg/cm³, per 1 mm of the carbon nanotube array 2, for example, 400 mm or more and 500 mm or less, in front-back direction.

Thus, the moving speed of the drawing position P of the carbon nanotube web 3 depends on the drawing speed of the carbon nanotube web 3, and relative to the drawing speed of the carbon nanotube web 3, for example, about 1/750 or more, preferably 1/600 or more, and for example, 1/400 or less, preferably 1/250 or less, even more preferably, 1/500.

To be specific, the moving speed of the drawing position P of the carbon nanotube web 3 is, for example, 0.5 mm/min or more and 1.5 mm/min or less.

As described above, along with the drawing of the carbon nanotube web 3, the substrate 1 is conveyed downstream in the drawing direction D at the drawing position P of the carbon nanotube web 3. For example, the drawing speed and the drawing angle θ can be controlled while monitoring the drawing position P with a camera.

The moving speed of the substrate 1 at the drawing position P is the same as the moving speed of the drawing position P of the carbon nanotube web 3.

In this manner, the movement of the drawing position P relative to the substrate 1 is offset by the movement of the substrate 1 at the drawing position P, and the drawing position P of the carbon nanotube web 3 is kept at the same position in the drawing direction D. Furthermore, by the movement of the substrate 1 at the drawing position P, the carbon nanotube array 2 is continuously fed to the drawing position P of the carbon nanotube web 3, and the carbon nanotube web 3 is continuously drawn from the carbon nanotube array 2.

Thereafter, the substrate 1 that has passed the drawing position P and from which the carbon nanotube array 2 is separated is preferably wound up, as shown in FIG. 1. To be more specific, a takeup shaft 25 as an example of the conveyer member winds up and collects the substrate 1 that has passed the drawing position P.

The takeup shaft 25 has a cylindrical shape extending in left-right direction. The takeup shaft 25 is rotatable around its axis. The takeup shaft 25 is disposed in spaced apart relation at the lower side relative to the drawing position P of the carbon nanotube web 3.

After the substrate 1 that has passed the drawing position P is fixed to the takeup shaft 25, the takeup shaft 25 rotates clockwise when it is seen from the left side to give a driving force to the substrate 1 to convey and wind up the substrate 1 at the above-described moving speed.

In the first embodiment, the substrate 1 is wound up by the takeup shaft 25 immediately after passing the drawing position P of the carbon nanotube web 3. That is, the substrate 1 is conveyed along the front-back directions to the drawing position P, as shown in FIG. 3A, and immediately after passing the drawing position P, is bent downward, and wound up by the takeup shaft 25.

Although not shown, preferably, the substrate 1 on which the carbon nanotube array 2 is formed can be conveyed by winding the substrate 1 around a roll shaft, and taking up the substrate 1 fed from the roll shaft by the takeup shaft 25.

The carbon nanotube array 2 can also be successively formed on the substrate 1 conveyed by roll to roll method. To be specific, a substrate 1 on which the carbon nanotube array 2 is not formed is wound around the roll shaft, and the substrate 1 is conveyed from the roll shaft to the takeup shaft 25, and between the roll shaft and the takeup shaft 25, the carbon nanotube array 2 can be formed successively on the substrate 1 being conveyed.

In the above-described manner, the carbon nanotube web 3 is continuously produced, and the substrate 1 from which the carbon nanotube array 2 is separated is continuously collected.

### (2) Method for producing a carbon nanotube collected product

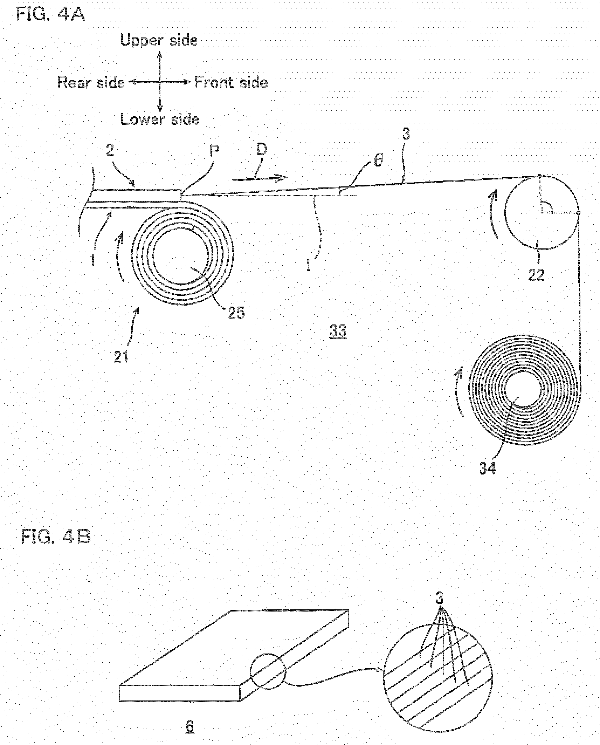

Such a carbon nanotube web 3 is processed into various industrial products, for example, a carbon nanotube twisted yarn 5 and a carbon nanotube stacked sheet 6 (ref: FIG. 4B).

In the first embodiment described below, the carbon nanotube web 3 is processed into a carbon nanotube twisted yarn 5 as an example of the carbon nanotube collected product.

To process the carbon nanotube web 3 into a carbon nanotube twisted yarn 5, first, a tension roller 22 as an example of the roller is prepared (preparation step).

The tension roller 22 has a cylindrical shape extending into left-right direction. The external diameter of the tension roller 22 is not particularly limited, and for example, it is 1 cm or more and 20 cm or less. The size of the tension roller 22 in left-right direction is not particularly limited as long as it is larger than the size of the carbon nanotube web 3 in left-right direction, and for example, it is more than 1 cm and 600 cm or less.

The tension roller 22 is disposed at a front side relative to the drawing position P of the carbon nanotube web 3 in spaced-apart relation. The interval between the tension roller 22 and the drawing position P is, for example, 10 cm or more and 20 cm or less.

Then, the carbon nanotube web 3 is allowed to run in the circumferential direction of the tension roller 22 so that it is positioned at the circumferential face of the tension roller 22 (running step).

At this moment, the carbon nanotube web 3 is disposed on a range of the circumferential face of the tension roller 22, the range corresponding to the central angle of the tension roller 22 of, for example, 5° to 180°, preferably 10° to 150°, even more preferably, 60 to 120°.

When the carbon nanotube web 3 is run around the circumferential face of the tension roller 22, the drawing angle θ of the carbon nanotube web 3 relative to the virtual plane I is kept in the above-described range.

Then, the carbon nanotube web 3 is drawn out from the tension roller 22 so as to pass the tension roller 22.

Then, the carbon nanotube web 3 is turned to twist the plurality of carbon nanotube single yarns 10 together (processing step). A carbon nanotube twisted yarn 5 is produced in this manner.

The carbon nanotube twisted yarn 5 has an external diameter of, for example, 5 µm or more, preferably 30 µm or more, and for example, 80 µm or less, preferably 60 µm or less, even more preferably, 40 µm or less.

The carbon nanotube twisted yarn 5 has a bulk density of, for example, 0.6 g/cm³ or more, preferably more than 0.6 g/cm³, even more preferably, 0.8 g/cm³ or more, and for example, 2.0 g/cm³ or less.

### (3) Apparatus for producing a carbon nanotube web

The method for producing a carbon nanotube twisted yarn 5 is conducted continuously, for example, as shown in FIG. 1, with a spinning apparatus 20 as an example of the apparatus for producing a carbon nanotube web. The spinning apparatus 20 includes a web production unit 21 and a spinning unit 23 as an example of the drawing member.

The web production unit 21 is disposed at the rear side portion of the spinning apparatus 20, and is configured to draw out the carbon nanotube web 3 from the carbon nanotube array 2 continuously.

The web production unit 21 includes a substrate 1 on which the carbon nanotube array 2 is disposed, a drawing device (not shown), the above-described tension roller 22, and the above-described takeup shaft 25.

The substrate 1 is flexible, and has an elongated flat belt shape. The carbon nanotube array 2 is disposed on the substrate 1 so as to extend in front-back direction.

The takeup shaft 25 is disposed at the lower side of the front end portion of the substrate 1. The front end portion of the substrate 1 is fixed onto the circumferential face of the takeup shaft 25.

The tension roller 22 is disposed at the front side relative to the front end portion of the carbon nanotube array 2 in spaced apart relation.

The spinning unit 23 is disposed at the lower side relative to the tension roller 22 in spaced apart relation, and includes a converging portion 26 and a collecting portion 24.

The conversing portion 26 is disposed at the lower side relative to the tension roller 22 in spaced apart relation, and includes a support plate 27 and a pair of shafts 28.

The support plate 27 has a substantially rectangular board shape extending in the left-right direction when it is seen from the front side. The pair of shafts 28 are disposed on the front side of the support plate 27, in slightly spaced-apart relation from each other in left-right direction. The shaft 28 has a substantially cylindrical shape extending in the front-back direction, and is supported by the support plate 27 so as to be relatively rotatable around its axis.

The collecting portion 24 is disposed at the lower side relative to the conversing portion 26 in spaced apart relation. The collecting portion 24 includes a rotating portion 30, a reel shaft 29, and a rotating shaft 31.

The rotating portion 30 substantially has a U-shape which opens toward the upper side when it is seen from the front side. The reel shaft 29 is disposed between the right-side wall and left-side wall of the rotating portion 30. The reel shaft 29 has a substantially cylindrical shape extending in the left-right direction and is rotatably supported by both the right-side wall and left-side wall of the rotating portion 30.

The rotating shaft 31 is disposed at the lower side relative to the rotating portion 30. The rotating shaft 31 has a substantially cylindrical shape extending in the up-down direction, and its upper end portion is fixed to the center of the lower wall of the rotating portion 30 in left-right direction. Thereby, the rotating portion 30 may rotate around the rotating shaft 31, namely, around an axis line along the up-down direction as its rotational center.

In such a spinning apparatus 20, the carbon nanotubes 4 of the rows 2A are drawn in parallel and simultaneously from the carbon nanotube array 2 to the front side by a drawing device which is not shown. Thereby, the plurality of carbon nanotube single yarns 10 are drawn from the carbon nanotube array 2 as a substantially sheet-shaped carbon nanotube web 3 including the plurality of carbon nanotube single yarns 10 arranged in parallel and along the left-right direction.

Then, the carbon nanotube web 3 is allowed to run about 1/4 round in the circumferential direction of the tension roller 22 from the upper end portion to the front end portion of the tension roller 22. Thereafter, the carbon nanotube web 3 is drawn out from the tension roller 22 so as to pass the tension roller 22 and to the lower side, and allowed to pass between the pair of shafts 28.

Thereby, the carbon nanotube web 3, that is, the plurality of carbon nanotube single yarns 10 are bundled into a linear shape (yarn shape). Then, the lower end portion of the plurality of bundled carbon nanotube single yarns 10 are fixed to the reel shaft 29 of the collecting portion 24.

At this moment, a tension is applied by the tension roller 22 to the carbon nanotube web 3 between the carbon nanotube array 2 and the tension roller 22, and between the tension roller 22 and the collecting portion 24.

Then, driving force is provided to the takeup shaft 25, the tension roller 22, the reel shaft 29, and the rotating shaft 31. Thereby, the takeup shaft 25, the tension roller 22, and the reel shaft 29 rotate clockwise when it is seen from the left side, and the rotating portion 30 rotates clockwise when viewed from the top.

Then, the carbon nanotube web 3 is drawn at the above-described drawing speed from the carbon nanotube array 2 by the rotation of the tension roller 22 and the reel shaft 29, and the substrate 1 is conveyed at the above-described moving speed by the rotation of the takeup shaft 25 toward the downstream of the drawing direction D at the drawing position P of the carbon nanotube web 3.

In this manner, the drawing position P of the carbon nanotube web 3 is kept at the same position in the drawing direction D.

Then, the substrate 1 feeds the carbon nanotube array 2 at the drawing position P continuously, and after passing the drawing position P, is wound up by the takeup shaft 25. The takeup shaft 25 is configured to move to the lower side along with the winding up of the substrate 1.

Meanwhile, the carbon nanotube web 3 is drawn out continuously from the carbon nanotube array 2 while the drawing angle θ is kept at the above-described value (the same angle).

Then, the carbon nanotube web 3 is send out to the lower side from the tension roller 22 after passing the tension roller 22, passes the pair of shafts 28 and bundled by the conversing portion 26. Thereafter, by the rotation of the rotating shaft 31, it is twisted while turning clockwise when viewed from the top, and moves toward the lower side, and wound up by the reel shaft 29.

At this moment, the rotational speed (peripheral speed) of the rotating portion 30 is, for example, 1000 rpm or more, preferably 2000 rpm or more, and for example, 5000 rpm or less, preferably 4000 rpm or less.

The carbon nanotube twisted yarn 5 is produced by the spinning apparatus 20 in the above-described manner.

Such a carbon nanotube twisted yarn 5 is used for various industrial products such as a textile (sheet) for which a carbon fiber is used, and a conductive line material for electric apparatuses (for example, a motor, a transformer, and a sensor).

### 2. Operations and effects

In the step of drawing the carbon nanotube web 3, the drawing position P of the carbon nanotube web 3 is, as shown in FIG. 1 and FIG. 3A, kept substantially at the same position in the drawing direction D of the carbon nanotube web 3.

Thus, changes in the relative position of the carbon nanotube web 3 and the carbon nanotube array 2 can be suppressed. As a result, the carbon nanotube web 3 can be stably drawn from the carbon nanotube array 2, and production efficiency of the carbon nanotube web 3 can be improved.

In the step of drawing the carbon nanotube web 3, as shown in FIG. 1 and FIG. 3A, the drawing position P of the carbon nanotube web 3 moves to the upstream in the drawing direction D relative to the substrate 1, and the substrate 1 moves downstream of the drawing direction D at the drawing position P of the carbon nanotube web 3 at the same speed as that of the moving speed of the drawing position P.

Thus, movement of the drawing position P of the carbon nanotube web 3 can be offset by movement of the substrate 1 at the drawing position P, and the drawing position P of the carbon nanotube web 3 can be kept substantially the same in the drawing direction D of the carbon nanotube web 3.

Then, the substrate 1 moves to the downstream in the drawing direction D at the drawing position P of the carbon nanotube web 3, and therefore the carbon nanotube array 2 disposed on the substrate 1 can be successively fed to the drawing position P of the carbon nanotube web 3.

As a result, the carbon nanotube web 3 can be stably drawn out from the carbon nanotube array 2 continuously.

In the step of drawing the carbon nanotube web 3, the substrate 1 passes the drawing position P as shown in FIG. 1 and FIG. 3A, toward the downstream in the drawing direction D, and after the carbon nanotube array 2 is separated, the substrate 1 is wound up.

Thus, after the substrate 1 passed the drawing position P of the carbon nanotube web 3, the substrate 1 can be prevented from being hindrance to the drawing of the carbon nanotube web 3, and the substrate 1 can be collected efficiently, achieving space saving.

The carbon nanotube web 3 can be drawn from the carbon nanotube array 2, as shown in FIG. 3A, so that the carbon nanotube web 3 is tilted with an angle of 0° or more and 10° or less relative to the virtual plane 1 orthogonal to the carbon nanotube 4 of the carbon nanotube array 2.

Thus, the carbon nanotube web 3 can be stably drawn from the carbon nanotube array 2 even more, and the carbon nanotube array 2 can be suppressed from remaining on the substrate 1 that has passed the drawing position P of the carbon nanotube web 3.

The carbon nanotube web 3 is allowed to run in the circumferential direction of the tension roller 22 without being processed, as shown in FIG. 1, and processed after passing the tension roller 22.

That is, the plurality of carbon nanotube single yarns 10 of the carbon nanotube web 3 are kept between the drawing position P of the carbon nanotube web 3 and the tension roller 22, arranged in parallel in a direction intersecting the extension direction of the carbon nanotube single yarn 10, that is, disposed so as to be substantially parallel to each other.

Then, the carbon nanotube web 3 is processed after passing the tension roller 22.

Thus, the force derived from the processing can be suppressed from affecting on the drawing position P of the carbon nanotube web 3 by the tension roller 22.

As a result, the carbon nanotube web 3 can be drawn stably and reliably, and the carbon nanotube web 3 can be smoothly processed. As a result, production efficiency of the carbon nanotube 4 collected product can be improved.

Furthermore, as shown in FIG. 1, the carbon nanotube web 3 can be smoothly processed with an easy method of twisting the carbon nanotube web 3 together, and the carbon nanotube twisted yarn 5 can be produced. Thus, productivity of the carbon nanotube twisted yarn 5 can be improved.

### 3. Second embodiment

Next, the second embodiment of the present invention is described with reference to FIG. 4A and FIG. 4B. In the second embodiment, the same reference numerals are given to the members same as those of the above-described first embodiment, and descriptions thereof are omitted.

In the first embodiment, as shown in FIG. 1, the carbon nanotube web 3 is processed into the carbon nanotube twisted yarn 5, but in the second embodiment, the carbon nanotube web 3 is processed into a carbon nanotube stacked sheet 6 as an example of the carbon nanotube collected product as shown in FIG. 4B.

To process the carbon nanotube web 3 into a carbon nanotube stacked sheet 6, as shown in FIG. 4A, first, a winding shaft 34 as an example of the drawing member is prepared.

The winding shaft 34 has a cylindrical shape extending in left-right direction. The winding shaft 34 is disposed at the downstream side in the conveyance direction of the carbon nanotube web 3 relative to the tension roller 22.

Then, the carbon nanotube web 3 is drawn from the carbon nanotube array 2, and the thereafter allowed to pass the tension roller 22, and then, the front end portion (free end portion) of the carbon nanotube web 3 is fixed onto the circumferential face of the winding shaft 34. Thereafter, the winding shaft 34 is rotated clockwise when it is seen from the left side.

Then, the carbon nanotube web 3 is drawn from the carbon nanotube array 2 at the above-described drawing speed, and the carbon nanotube web 3 is wound around on the circumferential face of the winding shaft 34 successively.

Then, the carbon nanotube web 3 wound around the winding shaft 34 is cut in left-right direction with a cutting blade (for example, razor, cutter edge), and separate from the winding shaft 34.

In this manner, as shown in FIG. 4B, a carbon nanotube stacked sheet 6 having a sheet shape is produced.

The carbon nanotube stacked sheet 6 includes a plurality of carbon nanotube webs 3 stacked in the thickness direction. The carbon nanotube webs 3 are stacked in a number of, for example, 5 or more, preferably 10 or more, and for example, 1000 or less, preferably 500 or less.

The carbon nanotube stacked sheet 6 has a thickness of, for example, 0.01 µm or more, preferably 5 µm or more, and for example, 500 µm or less, preferably 200 µm or less.

Such a carbon nanotube stacked sheet 6 can be produced continuously, as shown in FIG. 4A, by a sheet manufacturing apparatus 33. The sheet manufacturing apparatus 33 is the same as the spinning apparatus 20 except that the sheet manufacturing apparatus 33 has the winding shaft 34 instead of the spinning unit 23. That is, the sheet manufacturing apparatus 33 has the web production unit 21 and the winding shaft 34. The winding shaft 34 is disposed in spaced apart relation at the lower side relative to the tension roller 22.

With such a second embodiment, with an easy method of winding around the carbon nanotube web 3 to the winding shaft 34 several times, and then cutting the carbon nanotube web 3, the carbon nanotube web 3 can be smoothly processed, and the carbon nanotube stacked sheet 6 including the plurality of stacked carbon nanotube webs 3 can be produced. Thus, productivity of the carbon nanotube stacked sheet 6 can be improved.

Such a second embodiment also achieves the above-described operations and effects of the first embodiment.

### 4. Modified example

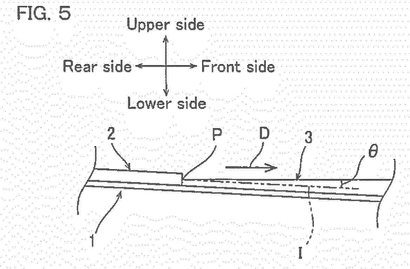

In the first embodiment and the second embodiment, as shown in FIG. 3A and FIG. 4A, the substrate 1 that has passed the drawing position P of the carbon nanotube web 3 is wound up by the takeup shaft 25, but without limitation to these, as shown in FIG. 5, the substrate 1 that has passed the drawing position P of the carbon nanotube web 3 does not have to be wound up. In this case, the substrate 1 does not have to be flexible.

In FIG. 5, the substrate 1 is conveyed so as to be slightly tilted to the lower side as it approaches the front side, and the carbon nanotube web 3 is drawn out along the front-back direction.

In the first embodiment, as shown in FIG. 3A, the substrate 1 that has passed the drawing position P of the carbon nanotube web 3 is wound up by the takeup shaft 25 immediately after passing the drawing position P. However, the present invention is not limited to this, and the substrate 1 that has passed the drawing position P may be wound up by the takeup shaft 25 after changing the conveying direction by the shaft member 35.

The shaft member 35 has a substantially cylindrical shape extending in left-right direction. The shaft member 35 is rotatable around its axis. The shaft member 35 is disposed in spaced apart relation at the lower side relative to the drawing position P of the carbon nanotube web 3.

In this case, the takeup shaft 25 is disposed in spaced apart relation at the lower side relative to the shaft member 35, and it does not have to be configured to move along the progress of winding up of the substrate 1.

In the first embodiment, the carbon nanotube web 3 is drawn out from the carbon nanotube array 2 by rotation of the tension roller 22 and the reel shaft 29. However, the present invention is not limited to this, and the carbon nanotube web 3 can be drawn from the carbon nanotube array 2 by rotation of only one of the tension roller 22 and the reel shaft 29.

In the first embodiment, the spinning apparatus 20 has the web production unit 21, the tension roller 22, and the spinning unit 23, and carries out drawing of the carbon nanotube web 3 from the carbon nanotube array 2, and processing of the carbon nanotube web 3 into the carbon nanotube twisted yarn 5 continuously. However, the present invention is not limited to this.

The drawing of the carbon nanotube web 3 from the carbon nanotube array 2 and the processing (spinning) of the carbon nanotube web 3 can be carried out in separate steps.

For example, as shown in FIG. 4A, the carbon nanotube web 3 can be drawn out from the carbon nanotube array 2, wound around the winding shaft 34, and then the carbon nanotube web 3 drawn out from the winding shaft 34 can be processed separately.

In the first embodiment, as shown in FIG. 1, the carbon nanotube web 3 is processed into the carbon nanotube twisted yarn 5. However, the present invention is not limited thereto, and the carbon nanotube web 3 can be processed into a carbon nanotube untwisted yarn as an example of the carbon nanotube collected product.

In this case, for example, the carbon nanotube web 3 (the plurality of carbon nanotube single yarn 10) is allowed to pass through a die having holes, for example, according to the method described in Japanese Unexamined Patent Publication No.2014-169521.

These modified examples also achieve the same operations and effects of the above-described first embodiment.

The first embodiment, the second embodiment, and the modified example can be suitably combined.

### [EXAMPLES]

The present invention is further described in detail based on EXAMPLES below. However, the present invention is not limited to Examples. The specific numerical values of mixing ratio (content), physical property value, and parameter used in the description below can be replaced with the upper limit values (numerical values defined with "or less" or "below") or lower limit values (numerical values defined with "or more" or "more than") of the corresponding numerical values of mixing ratio (content), physical property value, and parameter described in "DESCRIPTION OF EMBODIMENTS" above.

### Example 1

A silicon dioxide film was stacked on a stainless substrate (stainless steel substrate), and thereafter, iron was vacuum evaporated as a catalyst layer on the silicon dioxide film. The substrate had an elongated flat belt shape, had a length in elongation direction (vertical direction) of 10 m, and a length in width direction (lateral direction) of 20 mm. The substrate had a thickness of 50 µm.

Then, the substrate was heated to a predetermined temperature, and a source gas (acetylene gas) was applied to the catalyst layer. An elongated flat belt-shaped carbon nanotube array was formed on the substrate in this manner (preparation step).

In the carbon nanotube array, the plurality of carbon nanotubes extend in parallel to each other, and aligned to be orthogonal (perpendicular) to the substrate. The carbon nanotube had an average external diameter of about 12 nm, and an average length of about 300 µm. The carbon nanotube array had a bulk density of about 40 mg/cm³.

Then, the substrate on which the carbon nanotube array was formed was set in a web production unit (carbon nanotube web production apparatus) shown in FIG. 1 and FIG. 3A. At this moment, the front end portion of the substrate was fixed to the upper end portion of the takeup shaft, and the front end portion of the carbon nanotube array is positioned at the rear side relative to the roller.

Then, the plurality of carbon nanotubes disposed at the front end portion of the carbon nanotube array is held all at once throughout its width with a drawing device, and pulled toward the front side.

In this manner, the carbon nanotube web is drawn from the carbon nanotube array on the substrate. In the carbon nanotube web, the plurality of carbon nanotube single yarns are arranged in parallel in left-right direction. The carbon nanotube single yarn had an average diameter of about 60 nm to 80 nm.

Then, the carbon nanotube web was moved to the front side, and the roller was driven, thereby rotating the roller clockwise when it is seen from the left side.

In this manner, the carbon nanotube web was drawn continuously from the carbon nanotube array on the substrate, and after the substrate was moved to the front side at the position at which the carbon nanotube web is drawn, the substrate was wound around the roller (drawing step).

At this moment, the carbon nanotube web is tilted relative to the virtual plane orthogonal to the alignment direction of the carbon nanotube of the carbon nanotube array by 5°(drawing angle θ).

The carbon nanotube web is drawn at a speed of 500 mm/min, and the carbon nanotube array is separated at a speed of 1 mm/min. The substrate is moved at a speed of 1 mm/min. That is, the carbon nanotube array is separated and the substrate is moved at the same speed.

Thus, the position at which the carbon nanotube web was drawn was always kept at the same position in the drawing direction of the carbon nanotube web, and the drawing angle θ of the carbon nanotube web relative to the virtual plane was kept at 5°.

An elongated and flat belt shaped carbon nanotube web was prepared in the above-described manner.

### Example 2

An elongated carbon nanotube web was prepared in the same manner as in EXAMPLE 1, except that in the drawing step, the drawing angle θ of the carbon nanotube web relative to the virtual plane was changed to 2°.

### Example 3

An elongated carbon nanotube web was prepared in the same manner as in EXAMPLE 1, except that in the drawing step, the drawing angle θ of the carbon nanotube web relative to the virtual plane was changed to 3°.

### Example 4

An elongated carbon nanotube web was prepared in the same manner as in EXAMPLE 1, except that in the drawing step, the drawing angle θ of the carbon nanotube web relative to the virtual plane was changed to 8°.

### EXAMPLE 5

An elongated carbon nanotube web was prepared in the same manner as in EXAMPLE 1, except that in the drawing step, the drawing angle θ of the carbon nanotube web relative to the virtual plane was changed to 10°.

### Example 6

An elongated carbon nanotube web was prepared in the same manner as in EXAMPLE 1, except that in the drawing step, the drawing angle θ of the carbon nanotube web relative to the virtual plane was changed to 12°.

### Example 7

An elongated carbon nanotube web was prepared in the same manner as in EXAMPLE 1, except that in the drawing step, the drawing angle θ of the carbon nanotube web relative to the virtual plane was changed to 15°.

### Example 8

An elongated carbon nanotube web was prepared in the same manner as in EXAMPLE 1, except that in the drawing step, the drawing angle θ of the carbon nanotube web relative to the virtual plane was changed to 0°.

### Comparative Example 1

An elongated carbon nanotube web was prepared in the same manner as in EXAMPLE 1, except that in the drawing step, the substrate was not moved.

That is, in Comparative Example 1, in the drawing step, the position at which the carbon nanotube web was drawn moved toward the upstream in the drawing direction along with the drawing of the carbon nanotube web, and the drawing angle of the carbon nanotube web relative to the virtual plane changed gradually to a smaller value from 5°.

### Evaluation:

The carbon nanotube web and the carbon nanotube array in the drawing step in EXAMPLES and Comparative Example were visually observed, and evaluated based on the following criteria. The results are shown in Table 1.
A: The carbon nanotube array was entirely separated from the substrate as the carbon nanotube web, and the carbon nanotube web was continuously drawn out.
B: The carbon nanotube array partially (below 5 % of the entire carbon nanotube array) remained on the substrate, but carbon nanotube web was continuously drawn out.
C: The carbon nanotube array partially (6% or more and below 10 % of the entire carbon nanotube array) remained on the substrate but the carbon nanotube web was continuously drawn.
D: The carbon nanotube array partially (11% or more of the entire carbon nanotube array) remained on the substrate, and the carbon nanotube web partially snapped.

**[Table 1]**

| no. | Drawing angle(°) | Drawing stability |
|---|---|---|
| Example 1 | 5 | A |
| Example 2 | 2 | A |
| Example 3 | 3 | A |
| Example 4 | 8 | B |
| Example 5 | 10 | B |
| Example 6 | 12 | C |
| Example 7 | 15 | C |
| Example 8 | 0 | C |
| Comparative Example 1 | <5 | D |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### [INDUSTRIAL APPLICABILITY]

The method for producing a carbon nanotube web and the apparatus for producing a carbon nanotube web of the present invention can be suitably used for production of a carbon nanotube web used for various industrial products.

The method for producing a carbon nanotube collected product of the present invention can be suitably used for production of a carbon nanotube collected product used for various industrial products, in particular, production for a carbon nanotube twisted yarn and a carbon nanotube stacked sheet.

### DESCRIPTION OF REFERENCE NUMERALS

1 substrate
2 carbon nanotube array
4 carbon nanotube
5 carbon nanotube twisted yarn
6 carbon nanotube stacked sheet
10 carbon nanotube single yarn
20 spinning apparatus
23 spinning unit
25 takeup shaft
33 sheet manufacturing apparatus
34 winding shaft

## Claims

1. A method for producing a carbon nanotube web, the method comprising the steps of:
a step of preparing a carbon nanotube array disposed on a substrate, the carbon nanotube array comprising a plurality of carbon nanotubes vertically aligned relative to the substrate, and
a step of drawing a carbon nanotube web from the carbon nanotube array,
the carbon nanotube web comprising a plurality of carbon nanotube single yarns arranged in parallel in a direction intersecting the direction carbon nanotube single yarns extend, and
the carbon nanotube single yarns comprising a plurality of continuously connected carbon nanotubes;
wherein in the step of drawing a carbon nanotube web,
the drawing position of the carbon nanotube web from the carbon nanotube array is kept at the same position in the drawing direction of the carbon nanotube web.

2. The method for producing a carbon nanotube web according to Claim 1,
wherein in the step of drawing a carbon nanotube web,
the carbon nanotube array is successively separated from the substrate and the drawing position moves toward the upstream in the drawing direction relative to the substrate along with the drawing of the carbon nanotube web, and
at the drawing position, the substrate is moved toward the downstream of the drawing direction at the same speed with the moving speed of the drawing position so that the drawing position is kept the same in the drawing direction.

3. The method for producing a carbon nanotube web according to Claim 2, wherein
in the step of drawing a carbon nanotube web, the substrate from which the carbon nanotube array is separated is wound up.

4. The method for producing a carbon nanotube web according to Claim 1,
wherein in the step of drawing a carbon nanotube web, the carbon nanotube web is drawn from the carbon nanotube array so as to be tilted at an angle of 0°or more and 15°or less relative to the virtual plane orthogonal to the alignment direction of the carbon nanotube in the carbon nanotube array.

5. A method for producing a carbon nanotube collected product, the method including the steps of:
a step of preparing a roller having a cylindrical shape,
a step of allowing the carbon nanotube web to run in the circumferential direction of the roller so that the carbon nanotube web is positioned on the circumferential face of the roller, the carbon nanotube web being produced by the method for producing a carbon nanotube web according to Claim 1, and
a step of processing the carbon nanotube web after the carbon nanotube web is allowed to pass the roller.

6. The method for producing a carbon nanotube collected product according to Claim 5,
wherein the step of processing the carbon nanotube web includes a step of twisting the carbon nanotube web together to make a twisted yarn.

7. The method for producing a carbon nanotube collected product according to Claim 5,
wherein the step of processing a carbon nanotube web includes
a step of preparing a winding shaft having a cylindrical shape,
a step of winding the carbon nanotube web around the circumferential face of the winding shaft several times, and
a step of cutting the carbon nanotube web wound around the circumferential face of the winding shaft several times in an axis direction of the winding shaft and forming it into a sheet.

8. An apparatus for producing a carbon nanotube web comprising
a substrate on which a carbon nanotube array is disposed, the carbon nanotube array comprising a plurality of vertically aligned carbon nanotubes,
a drawing member that draws a carbon nanotube web from the carbon nanotube array,
the carbon nanotube web comprising carbon nanotube single yarns arranged in parallel in a direction intersecting the direction carbon nanotube single yarns extend, and
the carbon nanotube single yarn comprising the plurality of carbon nanotubes continuously connected; and
a conveyer member that conveys the substrate toward the downstream in the drawing direction of the carbon nanotube web at the drawing position of the carbon nanotube web from the carbon nanotube array.
